# EUROPEAN PATENT APPLICATION

(11) **EP 3 163 858 A1**
(43) Date of publication of application: **03.05.2017**
(21) Application number: 16180936.3
(22) Date of filing: 25.07.2016
(51) Int. Cl.: H04N 1/00, H04N 1/028

(54) **IMAGE READING APPARATUS AND SHEET PROCESSING APPARATUS**

(30) Priority: 30.10.2015 JP 2015214836
(71) Applicant: Kabushiki Kaisha Toshiba, Minato-ku Tokyo 105-8001 (JP)
(72) Inventor: NATORI, Naotake, Tokyo, Tokyo 105-8001 (JP); HASEBE, Mitsutake, Tokyo, Tokyo 105-8001 (JP); MATSUKI, Hiroshi, Tokyo, Tokyo 105-8001 (JP)
(74) Representative: Horn Kleimann Waitzhofer Patentanwälte PartG mbB

(57) **Abstract**

According to one embodiment, an image reading apparatus includes: a first illumination unit (21) for irradiating light at a first angle onto a sheet that is being conveyed; a second illumination unit (22) for irradiating light at a second angle onto the sheet that is being conveyed; illumination controllers (24, 25) for switching between a first irradiation state in which light is irradiated from the first illumination unit (21) and the second illumination unit (22) onto the sheet and a second irradiation state in which light is irradiated from only either the first illumination unit (21) or the second illumination unit (22) to the sheet; an imaging unit (23) for acquiring a first comparable image (802) in the first irradiation state and for acquiring a second comparable image (803) in the second irradiation state; and a defect detector (30) for detecting a defect of the sheet based on the difference between the first comparable image (802) and the second comparable image (803).

## Description

### TECHNICAL FIELD

Embodiments described herein relate generally to an image reading apparatus and a sheet processing apparatus.

### BACKGROUND OF THE INVENTION

Conventionally, there are sheet processing apparatuses for processing various sheets. Such sheet processing apparatuses have an image reader that reads an image on a sheet. The sheet processing apparatus conveys sheets to the vicinity of the image reader one sheet at a time. The image reader emits visible light and infrared light to a sheet that is being conveyed, reads visible imagery on the sheet from the reflected visible light, and reads infrared imagery on the sheet from the reflected infrared light. The sheet processing apparatus identifies the denomination, generation, genuineness and soundness of the sheet and the like, based on the visible imagery. The sheet processing apparatus also detects crumpling of the sheet based on the infrared imagery.

A sheet processing apparatus as described above detects crumpling of a sheet based on infrared imagery and a parameter that is set in advance. For this reason, it is necessary to set the parameter for detecting crumpling of a sheet in advance. It is necessary to set the parameter so as to allow sheet production variations and prevent the occurrence of detection omission (false negatives). Therefore, there is an issue that it is difficult to set the parameter. In addition, there is a possibility that a uniform parameter does not enable both robustness against production variations and the prevention of detection omission.

An object of the of the present invention is to provide an image reading apparatus and a sheet processing apparatus that are more convenient and can detect a sheet with higher accuracy.

### SUMMARY OF THE INVENTION

The above object is achieved by the subject matters of claims 1 and 9. Further developments of the invention are given in the dependent claims.

According to the above invention, there is provided an image reading apparatus including a first illumination unit configured to irradiate light at a first angle onto a sheet that is being conveyed; a second illumination unit configured to irradiate light at a second angle onto the sheet that is being conveyed; an illumination controller configured to switch between a first irradiation state in which light is irradiated from the first illumination unit and the second illumination unit onto the sheet and a second irradiation state in which light is irradiated from only either the first illumination unit or the second illumination unit to the sheet; an imaging unit configured to acquire a first comparable image (image to be compared) in the first irradiation state, and to acquire a second comparable image in the second irradiation state; and a defect detector configured to detect a defect of the sheet based on a difference between the first comparable image and the second comparable image.

Further, according to the above invention, there is provided a sheet processing apparatus including a conveyance unit configured to convey a sheet; an image reading apparatus including a first illumination unit configured to irradiate light at a first angle onto a sheet that is being conveyed; a second illumination unit configured to irradiate light at a second angle onto the sheet that is being conveyed; an illumination controller configured to switch between a first irradiation state in which light is irradiated from the first illumination unit and the second illumination unit onto the sheet and a second irradiation state in which light is irradiated from only either the first illumination unit or the second illumination unit to the sheet; an imaging unit configured to acquire a first comparable image in the first irradiation state, and to acquire a second comparable image in the second irradiation state; and a defect detector configured to detect a defect of the sheet based on a difference between the first comparable image and the second comparable image; an identification unit configured to identify the sheet based on a result of detection by the defect detector; and a classification processor configured to classify the sheet based on a result of identification by the identification unit.

### BRIEF DESCRIPTION OF THE DRAWINGS

FIG. 1 is a block diagram illustrating a configuration example of a sheet processing apparatus according to one embodiment;
FIG. 2 is a schematic diagram illustrating a configuration example of an image reading apparatus according to one embodiment;
FIG. 3 is a front view illustrating a configuration example of an illumination portion of the image reading apparatus according to one embodiment;
FIG. 4 is a block diagram illustrating an example of a control system of the image reading apparatus according to one embodiment;
FIG. 5 is a waveform diagram illustrating an example of an operation of the image reading apparatus according to one embodiment;
FIG. 6 is a waveform diagram illustrating an example of an operation of the image reading apparatus according to one embodiment;
FIG. 7 is a waveform diagram illustrating an example of an operation of the image reading apparatus according to one embodiment;
FIG. 8 is a schematic diagram illustrating an example of an operation of the image reading apparatus according to one embodiment; and
FIG. 9 is a schematic diagram illustrating an example of an operation of the image reading apparatus according to one embodiment.

### DETAILED DESCRIPTION

An image reading apparatus and a sheet processing apparatus according to one embodiment will be described below in details with reference to the drawings.

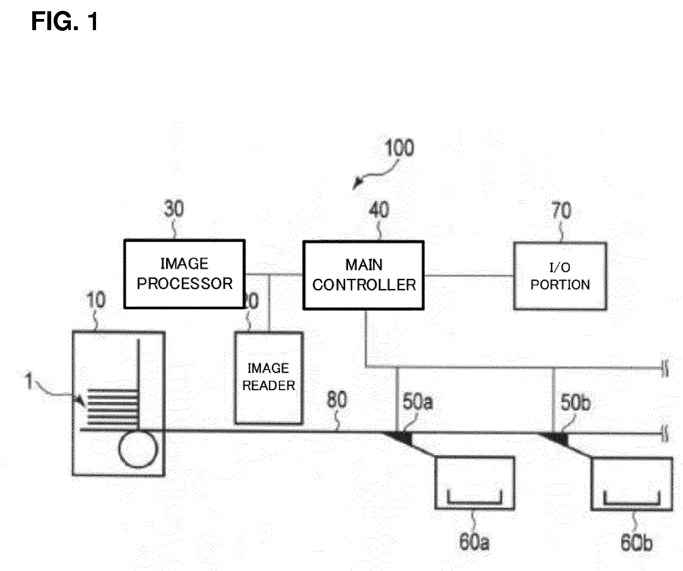

FIG. 1 shows a configuration example of a sheet processing apparatus 100 according to one embodiment. The sheet processing apparatus 100 performs various types of processing on a sheet 1, and based on the processing results, can detect the category of the sheet 1 such as a denomination (currency) and a generation (series), can authenticate whether the sheet 1 is a genuine or a counterfeit, can measure an extent of soiling, and can identify the presence/absence of crumpling and the like. Furthermore, the sheet processing apparatus 100 can classify and stack the sheets 1 based on the identification result.

The sheet processing apparatus 100 is provided with a supplier 10, an image reader 20, an image processor 30, a main controller 40, a first gate 50a, a second gate 50b, a first stacker 60a, a second stacker 60b, an input/output portion 70 and a conveying path 80. The sheet processing apparatus 100 may further be provided with one or more gates and stackers at a stage behind the second gate 50b. The sheet processing apparatus 100 may further be provided with, at a stage behind the second gate 50b, a cutter for cutting the sheets 1.

The supplier 10 supplies sheets to the conveying path 80 one sheet at a time. For example, the supplier 10 takes out, one sheet at a time, a plurality of sheets 1 that are set in a stacked state, and supplies the sheets to the conveying path 80.

The conveying path 80 is a conveyance unit for conveying the sheet 1 to the various units within the sheet processing apparatus 100. The conveying path 80 is provided with belts, pulleys, a driving motor and the like (not illustrated). The conveying path 80 drives the pulleys using the driving motor. The conveying belts are wrapped around a plurality of pulleys, and are operated by the pulleys driven by the driving motor. Moreover, the conveying belts are provided such that the sheet 1 supplied by the supplier 10 can be sandwiched by a plurality of conveying belts. In other words, the conveying path 80 can convey, at a constant speed, the sheet 1 supplied by the supplier 10 in a state where the sheet 1 is sandwiched by the plurality of conveying belts. Note that in the description below, the supplier 10 side of the conveying path 80 is taken to be the upstream side, and the opposite side is taken to be the downstream side.

The image reader 20 acquires an image from the sheet 1 that is being conveyed by the conveying path 80. The image reader 20 may be provided with a camera and an illumination. The camera may be provided with a line image sensor such as a CCD or a CMOS in which light receiving elements are arranged in a line, and a lens for forming an image of light on the line image sensor. The lens transmits the light reflection from the sheet 1 and forms an image of the reflection light on the line image sensor. The line image sensor generates electrical signals in accordance with the light that is imaged, and acquires the image. Accordingly, the image reader 20 can read the image from the sheet 1 that is being conveyed.

The image reader 20 according to this embodiment can emit visible light and infrared light to the sheet 1, read visible imagery on the sheet from the reflected visible light, and read infrared imagery of the sheet from the reflected infrared light.

The image processor 30 performs various types of image processing on an image acquired by the image reader 20. The image processor 30 is provided with a CPU, a random access memory, a program memory, a nonvolatile memory and the like. The CPU performs various types of calculation processing. The random access memory temporarily stores images acquired by the image reader 20 and various calculation results performed by the CPU. The program memory and the nonvolatile memory store various programs to be executed by the CPU, parameters and the like. The image processor 30 can execute various types of processing by the CPU executing the programs stored in the program memory.

For example, the image processor 30 can detect the category of the sheet 1 such as its denomination or generation based on an image acquired by the image reader 20. In other words, the image processor 30 functions as a category detector that detects the category of the sheet 1 based on either visible imagery or infrared imagery acquired by the image reader 20, or based on both the visible imagery and infrared imagery.

For example, the image processor 30 can also detect whether the sheet 1 is a genuine or a counterfeit based on an image acquired by the image reader 20. In other words, the image processor 30 functions as a genuineness detector that detects the genuineness of the sheet 1 based on either visible imagery or infrared imagery acquired by the image reader 20, or based on both the visible imagery and infrared imagery.

Furthermore, the image processor 30 can detect the extent of soiling of the sheet 1 based on an image acquired by the image reader 20, for example. The image processor 30 can also detect crumpling of the sheet 1 based on infrared imagery acquired by the image reader 20, for example. Note that the image processor 30 may be configured to use the detection result of crumpling of the sheet 1 when detecting the extent of soiling of the sheet 1. In other words, the image processor 30 functions as a defect detector for detecting the extent of soiling of the sheet 1 based on the infrared imagery acquired by the image reader 20, or based on both the visible imagery and the infrared imagery.

As described above, the image processor 30 can output the category of the sheet 1, the genuineness of the sheet 1 and the extent of soiling of the sheet 1 as detection results, based on an image read by the image reader 20. In other words, the image reader 20 and the image processor 30 acquire an image from the sheet 1, and function as an image reading apparatus for detecting the category, the genuineness, and the extent of soiling of the sheet 1 based on the acquired image.

The main controller 40 performs control of the entire sheet processing apparatus 100. The main controller 40 is provided with a CPU, a random access memory, a program memory, a nonvolatile memory and the like. The CPU performs various types of calculation processing. The random access memory temporarily stores the results of various calculations performed by the CPU. The program memory and nonvolatile memory store various programs to be executed by the CPU, control data and the like. The main controller 40 can perform various types of control by the CPU executing the programs stored in the program memory.

The main controller 40 controls the conveying path 80 such that the sheet 1 supplied by the supplier 10 is conveyed to the image reader 20. The main controller 40 controls the image reader 20 so as to acquire an image from the sheet 1, when the sheet 1 that is being conveyed reaches a reading position of the image reader 20.

Furthermore, the main controller 40 controls the conveying path 80 such that the sheet 1 is conveyed to the first gate 50a. The main controller 40 determines a conveyance destination of the sheet 1, before this sheet 1 reaches the first gate 50a that is provided downstream of the image reader 20. For example, the main controller 40 determines the conveyance destination of the sheet 1 in accordance with the denomination, the generation, the genuineness (whether the sheet 1 is a genuine or a counterfeit), the extent of soiling and the presence/absence of crumpling of the sheet 1.

The first gate 50a and the second gate 50b are gates for switching the conveyance destination of the sheet 1 based on control by the main controller 40. Note that when the first gate 50a and the second gate 50b are not distinguished from each other, these gates are referred to as gates 50. The main controller 40 controls the operations of the gates 50 in accordance with the conveyance destination of the sheet 1 that was determined.

The first stacker 60a and the second stacker 60b are stacking storages for stacking the sheets 1. Note that when the first stacker 60a and the second stacker 60b are not distinguished from each other, these stackers are referred to as stackers 60. The stackers 60 are provided such that the sheet 1 can be classified in accordance with the denomination, the generation, the genuineness (whether the sheet 1 is a genuine or a counterfeit), the extent of soiling, the presence/absence of crumpling of the sheet 1 and the like.

The first gate 50a is configured to switch the conveyance destination of the sheet 1 between the first stacker 60a and the conveying path 80 downstream of the first gate 50a, based on control by the main controller 40. The first stacker 60a stacks the sheets 1 that were branched by the first gate 50a.

The second gate 50b is configured to switch the conveyance destination of the sheet 1 between the second stacker 60b and the conveying path 80 downstream of the second gate 50b based on control by the main controller 40. The second stacker 60b stacks the sheets 1 that were branched by the second gate 50b. After this, the conveying path 80 continues to convey the sheet 1 until the sheet 1 is branched by one of the gates 50 and stacked on the stacker 60, or the sheet 1 reaches the end of the conveying path 80.

As described above, the main controller 40 can identify the conveyance destination of the sheet 1. Furthermore, the sheet processing apparatus 100 can classify the sheet using the gate 50, the stacker 60, and the conveying path 80. The main controller 40 functions as an identification unit that can identify the conveyance destination of the sheet 1 based on the various detection results. In addition, the gates 50, the stackers 60, and the conveying path 80 function as a classification processor that can classify the sheet 1 based on the result of identifying the conveyance destination of the sheet 1.

The input/output portion 70 is an interface to the outside. The input/output portion 70 performs data exchange with an external device that is connected to the sheet processing apparatus 100 or a storage medium. The input/output portion 70 may be provided with a disk drive, a USB connector, a LAN connector, and another interface capable of transmitting/receiving data. The sheet processing apparatus 100 can acquire data from the storage medium or the external device that is connected to the input/output portion 70. The sheet processing apparatus 100 also can transmit the processing result to the storage medium or the external device that is connected to the input/output portion 70. In addition, the input/output portion 70 may be provided with an operation input portion for receiving operator's various input operations via an operation portion.

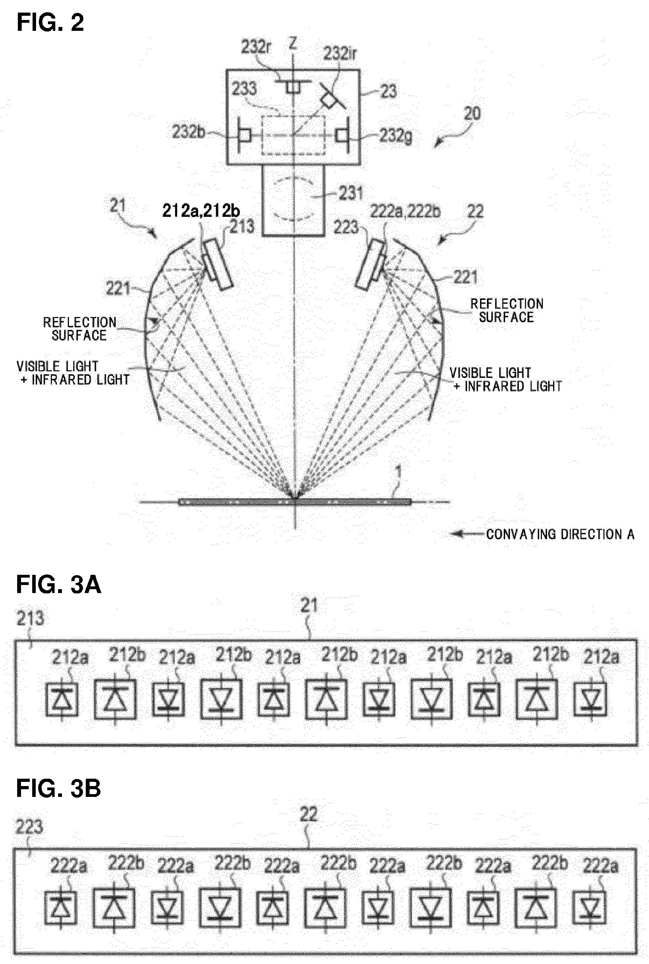

FIG. 2 shows a configuration example of the image reader 20. The image reader 20 is provided with a first illumination 21, a second illumination 22, and a camera 23. The image reader 20 reads an image from the sheet 1 that is being conveyed by the conveying path 80 in a conveyance direction A shown in FIG. 2.

The first illumination 21 emits light to the sheet 1 that is being conveyed. The first illumination 21 emits light over an irradiation range that is at least broader than the reading range of the camera 23. The first illumination 21 emits at least visible light and infrared light to the sheet 1 at the same time.

The second illumination 22 emits light to the sheet 1 that is being conveyed. The second illumination 22 emits light over an irradiation range that is at least broader than the reading range of the camera 23. The second illumination 22 emits at least visible light and infrared light to the sheet 1 at the same time.

The first illumination 21 and the second illumination 22 are provided with light sources and an optical system. The light sources include a light source that emits visible light and a light source that emits infrared light. The light source may be constituted by an LED, an organic EL, a cold cathode tube, a halogen light source, a fluorescent lamp, or another light emitting element. The optical system collects and guides light that is radiated from the light source, and causes the light to be irradiated onto the reading range of the camera 23. The first illumination 21 and the second illumination 22 irradiate light onto the surface of the sheet 1 serving as the object to be inspected. In this case, it is desirable that the first illumination 21 and the second illumination 22 have an illuminance distribution that is uniform in the lengthwise direction of the line image sensor. If a sheet 1 is in the reading range of the camera 23, light from the first illumination 21 and the second illumination 22 is irradiated onto the sheet 1. The light irradiated onto the sheet 1 is reflected by the surface of the sheet 1.

The camera 23 is provided with a photodiode array (a line image sensor) such as a CCD or a CMOS in which photodiodes are arranged in a line, and an optical system, such as a lens for forming an image of light on this line image sensor. The line image sensor is provided with a plurality of imaging elements (pixels) that convert received light into electrical signals, namely an image, and that are arranged in a line. The camera 23 may have an imaging optical axis in a direction (Z axis direction) perpendicular to the conveyance surface on which the sheet 1 is conveyed. The camera 23 receives the reflection light of light emitted from the first illumination 21 and the second illumination 22 to the sheet 1, and acquires an image.

The line image sensor accumulates electric charges in accordance with received light. The line image sensor also outputs an analogue voltage level that is based on the electric charges accumulated in each of the pixels of the line image sensor to an analog-digital converter (A/D converter, not illustrated) at a predetermined timing.

The A/D converter A/D converts the analog signals supplied from the line image sensor, and further performs correction such as AGC (automatic gain control) correction. The camera 23 consecutively converts the analog signals acquired by the line image sensor into digital signals. The camera 23 can acquire an image on the sheet 1 based on the consecutive digital signals.

Note that in some cases, the sheet 1 that is conveyed to be within the imaging range of the camera 23 is conveyed in a state in which dislocation or a tilt is caused, that is, a shifted/skew conveyance state (inclined conveyance state), instead of a normal conveyance state without a tilt. Accordingly, the camera 23 corrects the image on the sheet 1 in accordance with a conveyance state of the sheet 1 that is conveyed. Specifically, the camera 23 performs detection of the position of the sheet 1 (detection of a shift amount) and detection of a tilt (detection of a skew amount) based on the image on the sheet 1. The camera 23 corrects the image on the sheet 1 in accordance with the shift amount and/or the skew amount. The camera 23 transmits the image to the image processor 30.

The first illumination 21 is provided with a reflection member 211, a light source 212 and a mounting board 213. The light source 212 is a light emitting element that emits light. FIG. 3A shows a configuration example of the light source 212 and the mounting board 213 of the first illumination 21. The light source 212 is provided with a plurality of light sources 212a that emit visible light and a plurality of light sources 212b that emit infrared light. The light sources 212a are LEDs that emit visible light, for example. Also, the light sources 212b are LEDs that emit infrared light, for example. The light sources 212a are arranged in a line at a predetermined interval in a direction orthogonal to the conveyance direction of the sheet 1 (a direction parallel to the scanning direction of the camera 23). In addition, the light sources 212b are provided between the light sources 212a. Specifically, the first illumination 21 is provided with a light source 212 in which the light sources 212a and the light sources 212b are alternately arranged in a line. The first illumination 21 can emit mixed light of visible light and infrared light in a linear range using this light source 212.

Note that in this embodiment, an example will be described in which LEDs are used as the light source 212, but the present invention is not limited to this configuration. The light source 212 may have any configuration as long as the configuration enables visible light and infrared light to be individually emitted.

The mounting board 213 is a substrate for disposing the LEDs serving as the light source 212. The mounting board 213 is formed of aluminum, copper, or another material with high heat emissivity, for example. In addition, the mounting board 213 is equipped with an electric circuit for lighting up the light source 212.

The reflection member 211 is provided with a mirror (reflection surface) that totally reflects light. As shown in FIG. 2, the mirror of the reflection member 211 is formed in a polygonal line. In other words, the cross section of the mirror of the reflection member 211 has a shape having a plurality of straight lines. In other words, the reflection member 211 has a plurality of reflection surfaces that form different angles with the light source 212 and the conveyance surface, for example. The mirror of the reflection member 211 is constituted by a metal member such as aluminum. Specifically, the metal member is shaved such that its cross section has the shape of a polygonal line. Furthermore, mirror surfaces (reflection surfaces) are formed by polishing the surface of the metal member. Accordingly, the mirror of the reflection member 211 can be formed. The mirror of the reflection member 211 may also be formed of a folded metal plate, for example. In this case, the metal plate is folded such that the shape of the cross section has the shape of a polygonal line. Furthermore, the reflection surfaces of the mirror surfaces are formed by polishing the surface of the metal plate. Accordingly, the mirror of the reflection member 211 can be formed. The mirror of the reflection member 211 may also be formed of a plurality of rectangular mirrors, for example. In this case, the plurality of mirrors are combined such that the shape of the cross section has the shape of a polygonal line. Accordingly, the mirror of the reflection member 211 can be formed.

According to such a configuration, the first illumination 21 can cause visible light and infrared light from the light source 212 to be reflected by the reflection member 211 such that the illuminance of the visible light and infrared light from the light source 212 is uniform in a direction perpendicular to the conveyance surface. Accordingly, the first illumination 21 can emit, to the sheet 1, visible light and infrared light whose illuminance is stable regardless of the movement of the sheet 1 in the direction (Z axis direction) of the imaging optical axis. In addition, as described above, each of the mirror surfaces of the reflection member 211 is constituted such that the visible light and infrared light from the light source 212 are irradiated onto the conveyance surface of the sheet 1 at a predetermined angle (first angle). Accordingly, the first illumination 21 can irradiate visible light and infrared light onto the conveyance surface of the sheet 1 at the first angle.

The second illumination 22 is provided with a reflection member 221, a light source 222 and a mounting board 223. The light source 222 is a light emitting element that radiates light. FIG. 3B shows a configuration example of the light source 222 and the mounting board 223 of the second illumination 22. The light source 222 is provided with a plurality of light sources 222a that radiate visible light and a plurality of light sources 222b that radiate infrared light. The light sources 222a are LEDs that radiate visible light, for example. Moreover, the light sources 222b are LEDs that radiate infrared light, for example. The light sources 222a are arranged in a line at a predetermined interval in a direction (a direction parallel to the scanning direction of the camera 23) perpendicular to the conveyance direction of the sheet 1. The light sources 222b are provided between the light sources 222a. Specifically, the second illumination 22 is provided with the light source 222 in which the light sources 222a and the light sources 222b are alternately arranged in a line. The second illumination 22 can radiate mixed light of visible light and infrared light in a linear range using this light source 222.

Note that in this embodiment, an example is described in which LEDs are used as the light source 222, but the present invention is not limited to this configuration. The light source 222 may have any configuration if the configuration enables visible light and infrared light to be individually emitted.

The mounting board 223 is a substrate for disposing the LEDs serving as the light source 222. The mounting board 223 is formed of aluminum, copper, or another material with high heat emissivity, for example. In addition, the mounting board 223 is equipped with an electric circuit for lighting up the light source 222.

The reflection member 221 is provided with a mirror (reflection surface) that totally reflects light. As shown in FIG. 2, the mirror of the reflection member 221 is formed in a polygonal line. In other words, the cross section of the mirror of the reflection member 221 has a shape having a plurality of straight lines. In other words, the reflection member 221 has a plurality of reflection surfaces that form different angles with the light source 222 and the conveyance surface. The mirror of the reflection member 221 is constituted by a metal member such as aluminum. Specifically, the metal member is shaved such that the shape of its cross section has the shape of a polygonal line. Furthermore, the mirror surfaces (reflection surfaces) are formed by polishing the surface of the metal member. Accordingly, the mirror of the reflection member 221 can be formed. The mirror of the reflection member 221 may also be formed of a folded metal plate, for example. In this case, the metal plate is folded such that the cross section has the shape of a polygonal line. Furthermore, the reflection surfaces of the mirror surfaces are formed by polishing the surface of the metal plate. Accordingly, the mirror of the reflection member 221 can be formed. The mirror of the reflection member 221 may also be formed of a plurality of rectangular mirrors, for example. In this case, the plurality of mirrors are combined such that the cross section has the shape of a polygonal line. Accordingly, the mirror of the reflection member 221 can be formed.

According to such a configuration, the second illumination 22 can reflect visible light and infrared light from the light source 222 using the reflection member 221 such that the illuminances of the visible light and infrared light from the light source 222 becomes uniform in a direction perpendicular to the conveyance surface. Accordingly, the second illumination 22 can emit, to the sheet 1, visible light and infrared light whose illuminance is stable regardless of the change of the direction (Z axis direction) of the imaging optical axis of the sheet 1. In addition, as described above, each of the mirror surfaces of the reflection member 221 is configured such that the visible light and infrared light from the light source 222 are made incident to the conveyance surface of the sheet 1 at a predetermined angle (second angle). Accordingly, the second illumination 22 can irradiate visible light and infrared light onto the conveyance surface of the sheet 1 at the second angle.

Note that the constitutional elements of the second illumination 22 are provided at positions symmetrical to the constitutional elements of the first illumination 21 relative to the imaging optical axis of the camera 23. Accordingly, the first illumination 21 can emit light at the first angle, that is, upstream of the sheet 1 that is being conveyed. The second illumination 22 can emit light at the second angle, that is, downstream of the sheet 1 that is being conveyed. In other words, the first illumination 21 and the second illumination 22 can emit visible light and infrared light from upstream and downstream on the conveying path 80 over the imaging range of the camera 23. Note that the first illumination 21 and the second illumination 22 may be arranged in no particular order, upstream and downstream in the conveyance direction.

The camera 23 has a function of capturing light that coaxially enters into it, using a plurality of sensors. For this purpose, the camera 23 is provided with a plurality of line image sensors. The optical system can separate light that enters along one optical axis, and form images on the plurality of line image sensors. As shown in FIG. 2, the camera 23 is provided with a lens 231, a plurality of line image sensors 232 and a spectral member 233. The lens 231 is an optical system for forming images of transmitted light on the plurality of line image sensors 232. The lens 231 receives light from a predetermined range, and forms images on the line image sensors 232.

The camera 23 may be provided with the plurality of line image sensors 232 that respectively detect visible light such as red (R), green (G) or blue (B) light, or infrared light (IR). Specifically, the camera 23 may be provided with a line image sensor 232r for detecting red light and generating R signals, a line image sensor 232g for detecting green light and generating G signals, a line image sensor 232b for detecting blue light and generating B signals, and a line image sensor 232ir for detecting infrared light and generating IR signals.

The spectral member 233 has a prism for separating light that enters along one optical axis into four types of light each having a different wavelength band, namely red light, green light, blue light, and infrared light. The spectral member 233 separates red light from the incident light, and forms an image of the separated light on the line image sensor 232r. The spectral member 233 separates green light from the incident light, and forms an image of the separated light on the line image sensor 232g. The spectral member 233 separate blue light from the incident light, and forms an image of the separated light on the line image sensor 232b. The spectral member 233 separates infrared light from the incident light, and forms an image of the separated light on the line image sensor 232ir. In other words, the spectral member 233 separates the light that is incident along one optical axis into a plurality of types of light that have different wavelengths.

Note that the camera 23 may have a configuration in which light that is made incident from different positions and has different wavelengths is formed into respective images on the different line image sensors, instead of a configuration in which light that is incident along one optical axis is formed into images on a plurality of line image sensors. For example, the camera 23 may also be configured to detect rays of light beams of different colors from imaging ranges separated at predetermined distances in the conveyance direction of the sheet 1. The camera 23 may also be configured to correct the positional deviation of signals that were detected from the different positions and have different colors by performing image signal processing, and acquire the image of the sheet 1.

The camera 23 outputs the signals detected by the line image sensors 232r, 232g and 232b as electrical signals for visible imagery. The A/D converter can acquire the visible imagery based on the electrical signals for visible imagery. The camera 23 also outputs, as electrical signals for infrared imagery (IR image), the signals detected using the line image sensor 232ir. The A/D converter can acquire the infrared imagery based on the electrical signals for infrared imagery. In the other words, if the sheet 1 is within the imaging range of the camera 23, visible light and infrared light that are diffused and reflected by the surface of the sheet 1 are made incident to the lens 231 of the camera 23 along the same optical axis. The camera 23 can respectively acquire visible imagery and infrared imagery from the light including the visible light and infrared light that is made incident along the same optical axis.

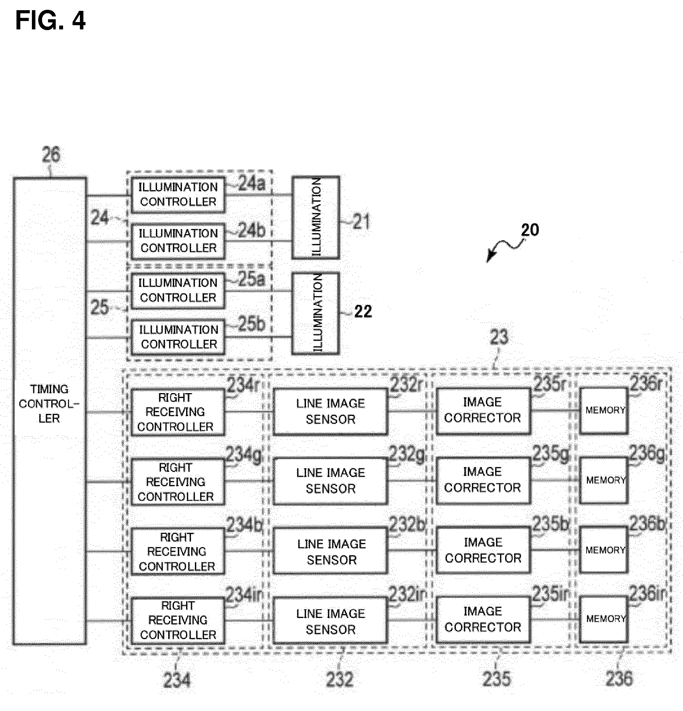

FIG. 4 is a block diagram showing a configuration example of a control system of the image reader 20. As described above, the image reader 20 is provided with the first illumination 21, the second illumination 22 and the camera 23. The image reader 20 is further provided with an illumination controller 24a, an illumination controller 24b, an illumination controller 25a, an illumination controller 25b, and a timing controller 26.

The illumination controller 24a controls the lighting and the light emission intensity of the plurality of light sources 212a that radiate visible light of the first illumination 21. The illumination controller 24b controls the lighting and the light emission intensity of the plurality of light sources 212b of the first illumination 21 that radiate infrared light. The illumination controller 25a controls the lighting and the light emission intensity of the plurality of light sources 222a of the second illumination 22 that radiate visible light. The illumination controller 25b controls the lighting and the light emission intensity of the plurality of the light sources 222b of the second illumination 22 that radiate infrared light.

Moreover, the camera 23 of the image reader 20 is provided with a light receiving controller 234, the line image sensors 232, an image correction portion 235, and a memory 236 that stores correction data.

The light receiving controller 234 controls signal detection by the line image sensors 232. The light receiving controller 234 can cause the line image sensors 232 to execute scanning by outputting scanning signals to the line image sensors 232. For example, the light receiving controller 234 can cause the line image sensors 232 to continuously execute scanning over time, by outputting, as scanning signals, rectangular pulses having a cycle that is based on the conveyance speed to the line image sensor 232.

The line image sensor 232 is provided with a plurality of light receiving elements arranged in a line in a direction (the main scanning direction) perpendicular to the conveyance direction a of the sheet 1. When having received scanning signals, the line image sensor 232 scans the sheet 1 in the main scanning direction, and can acquire image signals for one line using the plurality of light receiving elements. Furthermore, the line image sensor 232 can acquire image signals that are continuous over time for a plurality of lines by continuously executing the scanning over time in accordance with the scanning signals. Accordingly, the line image sensors 232 can scan the sheet 1 in a direction (the sub scanning direction) parallel to the conveyance direction a of the sheet 1. The camera 23 can convert the image signals detected by the line image sensor 232 into image data by the A/D converter (not illustrated) performing AD conversion. The camera 23 can acquire visible imagery and infrared imagery for one of the sheets 1 by connecting images for a plurality of lines acquired by the line image sensors 232. That is to say, the visible imagery and infrared imagery are images in which pixels are arranged in a two dimensional space having the main scanning direction and the sub scanning direction.

The image correction portion 235 corrects the visible imagery and the infrared imagery using correction data stored in the memory 236. The memory 236 is a memory for storing correction data that is set in advance. For example, the memory 236 stores, as the correction data, correction values generated based on the sensitivity unevenness property of the pixels of the line image sensor 232, brightness irregularities of the first illumination 21 and the second illumination 22, the optical characteristics of the lens 231 and/or the like. The image correction portion 235 performs shading correction, brightness correction, distortion correction and the like on the visible imagery and the infrared imagery based on the correction data stored in the memory 236. The camera 23 transmits the corrected visible imagery and infrared imagery to the image processor 30.

The timing controller 26 controls the operation timings of the light receiving controller 234, the illumination controller 24, and an illumination controller 25. The timing controller 26 synchronizes the operation timings of the light receiving controller 234, the illumination controller 24 and the illumination controller 25.

For example, the timing controller 26 inputs the same clock signals to the light receiving controller 234, the illumination controller 24 and the illumination controller 25, and can synchronize the operation timings of the light receiving controller 234, the illumination controller 24 and the illumination controller 25 by operating the light receiving controller 234, the illumination controller 24 and the illumination controller 25 at a timing that is based on these clock signals. For example, the light receiving controller 234 can synchronize the timing of scanning by the line image sensor 232 to the clock signals, by outputting scanning signals having a cycle that corresponds to the above clock signals to the line image sensor 232. Moreover, the illumination controller 24 and the illumination controller 25 can respectively control turning on and turning off of the first illumination 21 and the second illumination 22 at the timing of scanning by the line image sensor 232, by controlling the timings of turning on and turning off of the first illumination 21 and the second illumination 22 so as to operate at timings that correspond to the above clock signals. As a result, the timing controller 26 can synchronize the operation timings of the light receiving controller 234, the illumination controller 24, and the illumination controller 25. Note that the configuration may be adopted in which the timing controller 26 unitedly controls the timing of scanning of each of the line image sensors 232, and the timings of turning on and turning off of the first illumination 21 and the second illumination 22.

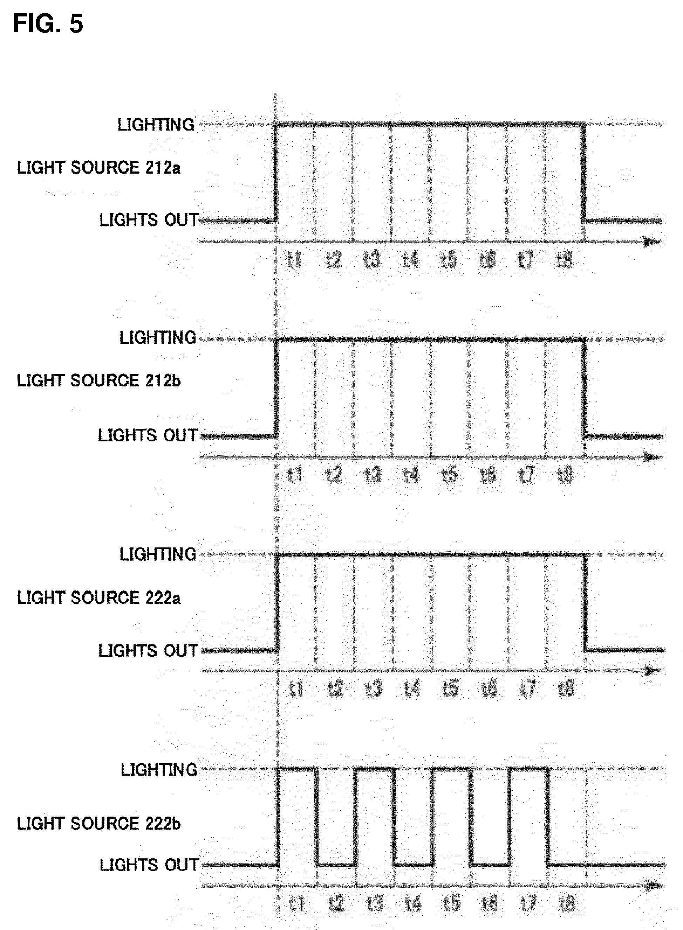

FIGS. 5 to 7 are diagrams illustrating an example of an operation of the image reader 20. Note that, in this example, it is assumed that scanning of the entire sheet 1 is completed during the period from the timing t1 to the timing t8, which are the timings of scanning by the line image sensor 232. In other words, it is assumed that the number of pixels in the sub scanning direction is eight. However, the image reader 20 is not limited to this configuration. The number of pixels (resolution) in the sub scanning direction may be any value.

In the examples of FIGS. 5, 6 and 7, the illumination controller 24 and the illumination controller 25 control the first illumination 21 and the second illumination 22 such that the light sources 212a and the light sources 222a that radiate visible light are turned on over the period from the timing t1 to the timing t8. In other words, the illumination controller 24 and the illumination controller 25 control the first illumination 21 and the second illumination 22 such that visible light is always emitted from the first illumination 21 and the second illumination 22 to the sheet 1. Note that even if the light sources 212a and the light sources 222a are turned off, the present invention can be implemented.

The illumination controller 24 and the illumination controller 25 control the first illumination 21 and the second illumination 22 such that the irradiation state of infrared light from the first illumination 21 and the second illumination 22 to the sheet 1 becomes either a first irradiation state in which the infrared light is irradiated from both the first illumination 21 and the second illumination 22 onto the sheet 1, or a second irradiation state in which the light is irradiated from only either the first illumination 21 or the second illumination 22 onto the sheet 1. The illumination controller 24 and the illumination controller 25 control the first illumination 21 and the second illumination 22 such that the light sources 212b and the light sources 222b are turned on in the first irradiation state. Moreover, the illumination controller 24 and the illumination controller 25 control the first illumination 21 and the second illumination 22 such that either the light sources 212b or the light sources 222b are turned on in the first irradiation state.

If there is a defect such as crumpling, folding or tearing of the sheet 1, it is highly possible that the surface of the sheet 1 has unevenness. In the first irradiation state, infrared light is irradiated onto the sheet 1 at the first angle and the second angle, and thus a shadow due to the above unevenness is hardly generated. Therefore, in the case of the first irradiation state, the camera 23 can acquire the infrared imagery (a first comparable image) that is hardly affected by a defect of the sheet 1. In the second irradiation state, infrared light is emitted at either the first angle or the second angle to the sheet 1, and thus a shadow is likely to be generated on the surface of the sheet 1. Therefore, in the case of the second irradiation state, the camera 23 can acquire the infrared imagery (a second comparable image) that is easily affected by a defect of the sheet 1. That is, the camera 23 functions as an imaging unit that can acquire the first comparable image that is hardly affected by a defect of the sheet 1 in the case of the first irradiation state and acquire the second comparable image that is easily affected by a defect of the sheet 1 in the case of the second irradiation state. The image processor 30 can detect a defect of the sheet 1 based on the difference between the first comparable image and the second comparable image.

The illumination controller 24 and the illumination controller 25 can switch between the first irradiation state and the second irradiation state in accordance with the timing of scanning of the line image sensor 232 of the camera 23. For example, a configuration may be adopted in which the illumination controller 24 and the illumination controller 25 switch between the first irradiation state and the second irradiation state every time the line image sensor 232 of the camera 23 performs scanning for one line. A configuration may also be adopted in which the illumination controller 24 and the illumination controller 25 switch between the first irradiation state and the second irradiation state every time line image sensors 232 of the camera 23 perform scanning for a predetermined number of lines.

For example, in the example of FIG. 5, the illumination controller 24 turns on the light sources 212b over the period from the timing t1 to the timing t8. In addition, the illumination controller 25 turns on the light sources 222b at the timings t1, t3, t5 and t7, and turns off the light sources 222b at the timings t2, t4, t6 and t8. In other words, the illumination controller 25 performs intermittent lighting by switching between turning on and turning off of the light sources 222b every time the line image sensor 232 scans a line. Accordingly, the illumination controller 24 and the illumination controller 25 can alternately switch between the first irradiation state and the second irradiation state every time the line image sensor 232 scans a line.

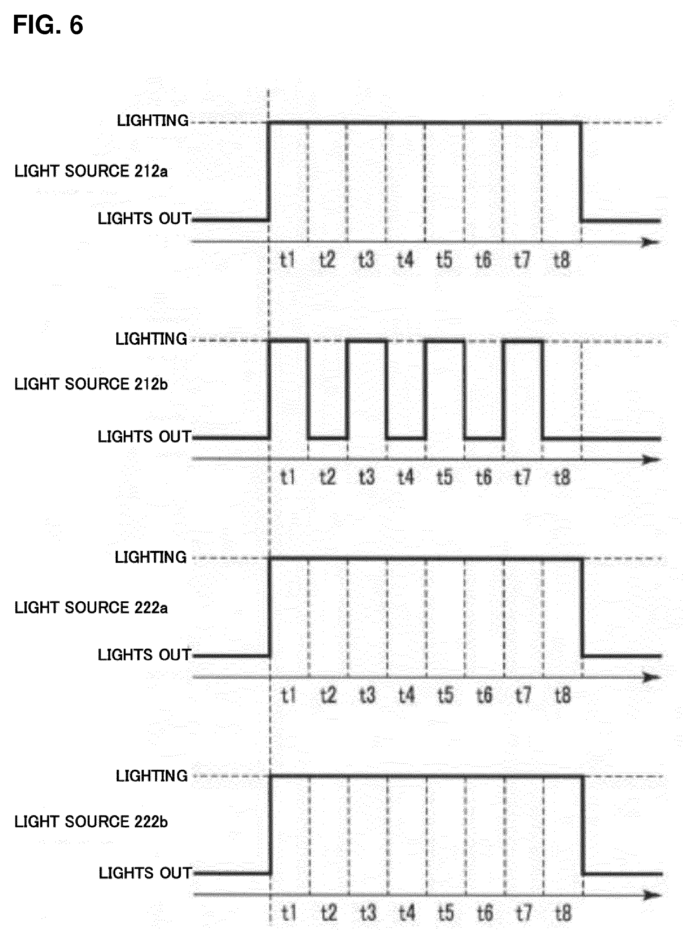

In the example in FIG. 6, the illumination controller 24 turns on the light sources 212b at the timings t1, t3, t5 and t7, and turns off the light sources 212b at the timings t2, t4, t6 and t8. The illumination controller 25 turns on the light sources 222b over the period from the timing t1 to the timing t8. In other words, the illumination controller 24 performs intermittent lighting by switching between turning on and turning off of the light sources 212b every time the line image sensor 232 scans a line. Accordingly, the illumination controller 24 and the illumination controller 25 can alternately switch between the first irradiation state and the second irradiation state every time the line image sensor 232 scans a line.

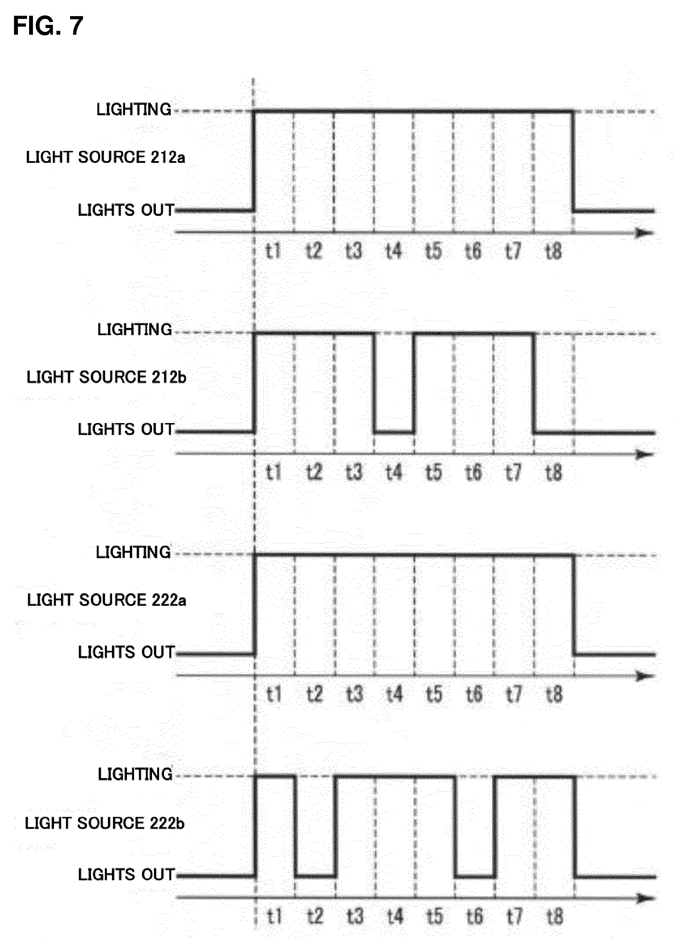

In the example of FIG. 7, the illumination controller 24 turns on the light sources 212b at the timings t1, t2, t3, t5, t6 and t7, and turns off the light sources 212b at the timings t4 and t8. The illumination controller 25 turns on the light sources 222b at the timings t1, t3, t4, t5, t7 and t8, and turns off the light sources 222b at the timings t2 and t6. Accordingly, at the timings t1, t3, t5 and t7, the first irradiation state is entered in which the light sources 212b and the light sources 222b are turned on. At the timings t2, t4, t6 and t8, the second irradiation state is entered in which either the light sources 212b or the light sources 222b are turned on. Note that at the timings t2 and t6, a state is entered in which the light sources 212b are turned on, and the light sources 222b are turned off. At the timings t4 and t8, a state is entered in which the light sources 212b are turned off and the light sources 222b are turned on. According to such a configuration as well, the illumination controller 24 and the illumination controller 25 can generate the first irradiation state and the second irradiation state.

Note that the turning on and turning off patterns of the light sources 212a, the light sources 212b, the light sources 222a, and the light sources 222b for generating the first irradiation state and the second irradiation state are not limited to the examples in FIGS. 5 to 7. The turning on and turning off patterns of the light sources 212a, the light sources 212b, the light sources 222a, and the light sources 222b may be any pattern as long as the pattern includes the first irradiation state in which both the light sources 212b and the light sources 222b are turned on and the second irradiation state in which either the light sources 212b or the light sources 222b are turned on.

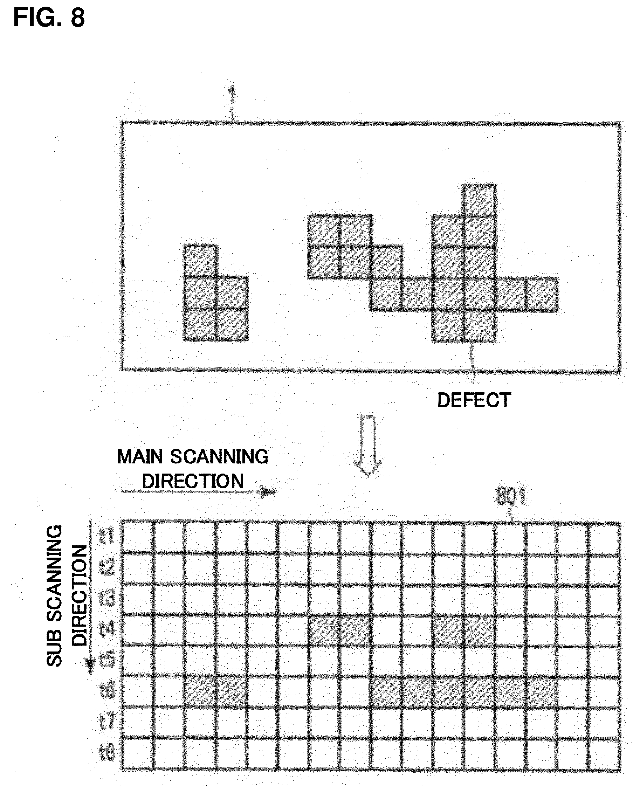

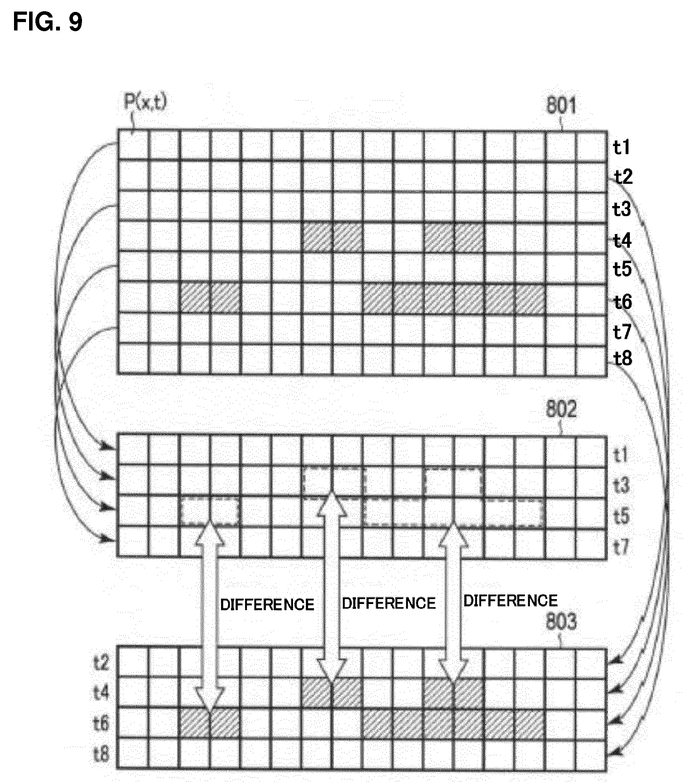

FIGS. 8 and 9 show an example of the operations of the image reader 20 and the image processor 30. As described above, the image processor 30 detects, based on an image read by the image reader 20, the category of the sheet 1, the genuineness of the sheet 1 and the extent of soiling of the sheet 1. Note that FIGS. 8 and 9 show an example in which a defect such as crumpling, folding or tearing of the sheet 1 is detected based on the infrared imagery acquired from the sheet 1.

As shown in FIG. 8, if there is a defect such as crumpling, folding or tearing of the sheet 1, there is a high possibility that the surface of the sheet 1 has unevenness. Accordingly, as described above, in the first irradiation state in which infrared light is irradiated onto the sheet 1 from both the first illumination 21 that emits infrared light to the sheet 1 at the first angle and the second illumination 22 that emits infrared light to the sheet 1 at the second angle, the image reader 20 can acquire an infrared image that is hardly affected by the defect of the sheet 1. In the second irradiation state in which infrared light is emitted from either the first illumination 21 or the second illumination 22 to the sheet 1, the image reader 20 can acquire infrared imagery that is easily affected by defects of the sheet 1.

Note that there is an absolute difference in light amount between the first irradiation state and the second irradiation state. In view of this, the image correction portion 235 of the image reader 20 may be configured so as to correct the infrared imagery that was acquired in the second irradiation state, in accordance with the light amount difference between the first irradiation state and the second irradiation state. For example, the image correction portion 235 may correct the infrared imagery that was acquired in the second irradiation state so as to cancel the light amount difference between the first irradiation state and the second irradiation state. Moreover, for example, the light receiving controller 234 of the image reader 20 may be configured so as to adjust the gain of the line image sensor 232 such that the light amount difference between the first irradiation state and the second irradiation state is canceled at a timing at which the second irradiation state is entered.

In view of this, in the case of acquiring infrared imagery from one of the sheets 1 as in the examples in FIGS. 5 to 7, the image reader 20 can acquire the infrared imagery 801 shown in FIG. 8 that is an the image of the sheet 1 by scanning the sheet 1 while switching between the first irradiation state and the second irradiation state. The image reader 20 outputs the infrared imagery 801 to the image processor 30.

The infrared imagery 801 is the infrared imagery acquired by the image reader 20 while infrared light is irradiated onto the sheet 1 as in the example shown in FIG. 5. In this case, the image reader 20 generates the first irradiation state at the timings t1, t3, t5 and t7, and generates the second irradiation state at the timings t2, t4, t6 and t8. As a result, the image reader 20 can acquire, at the timings t1, t3, t5 and t7, an image that is hardly affected by defects of the sheet 1. The image reader 20 can further acquire, at the timings t2, t4, t6 and t8, an image that is easily affected by defects of the sheet 1.

As shown in FIG. 9, in the case of having received the infrared imagery 801, the image processor 30 extracts, as the first comparable image 802, an area within the infrared imagery 801 that was read in the first irradiation state, and extracts, as a second comparable image 803, an area within the infrared imagery 801 that was read in the second irradiation state. Accordingly, the image processor 30 can divide the infrared imagery 801 into the first comparable image 802 that has less shadows and the second comparable image 803 that has more shadows. Note that the image processor 30 may be configured so as to divide the infrared imagery 801 into the first comparable image 802 and the second comparable image 803 for every predetermined number of lines.

Note that instead of a configuration in which the image processor 30 separates the first comparable image 802 and the second comparable image 803 from the infrared imagery 801, a configuration may be adopted in which the image reader 20 directly generates the first comparable image 802 and the second comparable image 803. For example, the image reader 20 can directly generate the first comparable image 802 and the second comparable image 803 by coupling, in the sub scanning direction, the individual images acquired in the first irradiation state and the individual images acquired in the second irradiation state.

Next, the image processor 30 compares the first comparable image 802 to the second comparable image 803. The image processor 30 detects defects of the sheet 1 such as crumpling, folding, tearing or soiling based on the result of comparing the first comparable image 802 to the second comparable image 803. For example, as shown in FIG. 9, the image processor 30 compares the first comparable image 802 to the second comparable image 803 by calculating the difference in pixel value (e.g., the absolute value of the difference in density value) for each of the corresponding pixels, using the upper left pixels of the first comparable image 802 and the second comparable image 803 as origin points.

For example, the image processor 30 overlaps the first comparable image 802 and the second comparable image 803 such that the origin points of those images are overlapped, considers the overlapping pixels to be corresponding pixels, and compares those pixels. Letting the resolution of the line image sensor 232ir in the scanning direction be x, and the resolution in the sub scanning direction be t, the upper end pixels of the infrared imagery 801 are arranged as P(1, 1), P(2, 1) ... P(x, 1). The left end pixels of the infrared imagery 801 are arranged as P(1, 1), P(1, 2) ... P(1, t). The upper end pixels of the first comparable image 802 are arranged as P(1, 1), P(2, 1) ... P(x, 1). The left end pixels of the first comparable image 802 are arranged as P(1, 1), P(1, 3) ... P(1, t - 1). The upper end pixels of the second comparable image 803 are arranged as P(1, 2), P(2, 2) ... P(x, 2). The left end pixels of the second comparable image 803 are arranged as P(1, 2), P(1, 4) ... P(1, t). The image processor 30 considers P(1, t) of the second comparable image 803 and P(x, t - 1) of the first comparable image 802 to be corresponding pixels, and compares the pixel value for each of the corresponding pixels. Specifically, the image processor 30 compares the pixel values of the pixels that are at the same position in the main scanning direction in the infrared imagery 801 and that are adjacent in the sub scanning direction. Accordingly, the image processor 30 can compare an image acquired in the first irradiation state to an image acquired in the second irradiation state. Note that if the resolution in the sub scanning direction is sufficiently large for the "degree" of crumpling that is to be detected, the image reader 20 can consider the adjacent pixels of the infrared imagery 801 to be at substantially the same positions.

An example was described above, in which the image processor 30 compares the pixel values of pixels that are at the same position in the main scanning direction in the infrared imagery 801 and are adjacent in the sub scanning direction, but the present invention is not limited to this configuration. The image processor 30 may have any configuration if a line acquired in the first irradiation state and a line acquired in the second irradiation state, those lines being at the same position in the main scanning direction in the infrared imagery 801, are compared. For example, if a configuration is adopted in which the illumination controller 24 and the illumination controller 25 generate the first irradiation state at the timing t1, and generate the second irradiation state at the timings t2 to t8, the image processor 30 can extract the first comparable image 802 from an area of P(x, 1), and extract the second comparable image 803 from an area of P(x, 2) to P(x, 8). In this case, the image processor 30 compares the pixel values of the pixels that are at the same position in the main scanning direction in the infrared imagery 801 and are adjacent or spaced apart in the sub scanning direction. Specifically, the image processor 30 compares each of the pixels of the area of P(x, 1) to each of the pixels on each of the lines of the area of P(x, 2) to P(x, 8), which are at the same position in the main scanning direction. According to such a configuration, it is possible to increase an area for extracting the second comparable image 803 in which a shadow is likely to be generated due to a defect.

Note that the image processor 30 may be configured so as to combine a plurality of pixels to generate an area, and compare the pixel values area by area, instead of comparing the pixel value pixel by pixel. In this case, the image processor 30 may perform the comparison based on the total or average of the pixel values within the area, for example.

If the difference in pixel value between the first comparable image 802 and the second comparable image 803 is greater than or equal to a threshold that was set in advance, the image processor 30 determines that there is a defect such as crumpling, folding or tearing at a corresponding position on the sheet 1. This threshold is stored in a program memory, a nonvolatile memory or the like of the image processor 30. This threshold may be any value as long as it is possible to detect the difference in pixel value between the first comparable image 802 and the second comparable image 803 that arises when there is a defect of the sheet 1. The first comparable image 802 and the second comparable image 803 have been acquired from the same sheet 1, and thus production variations among the sheets 1 can be ignored. Therefore, the image processor 30 can use a uniform threshold in order to detect a defect. Accordingly, the image processor 30 can achieve both robustness against production variations and the prevention of detection omission.

Note that the image processor 30 may also be configured to directly express the degree of crumpling based on the absolute value of the difference in pixel value between the first comparable image 802 and the second comparable image 803. In other words, the image processor 30 may be configured to output a detection result as the degree of crumpling, instead of just the presence/absence of crumple. In this case, the main controller 40 determines, in accordance with the degree of the crumpling, that the sheet 1 is a damaged sheet.

As described above, the image reader 20 is provided with the first illumination 21 that irradiates light at the first angle onto the sheet 1 that is being conveyed and the second illumination 22 that irradiates light at the second angle onto a sheet that is being conveyed. The image reader 20 acquires the first comparable image in the first irradiation state in which light is irradiated from the first illumination 21 and the second illumination 22 onto the sheet 1, or acquires the second comparable image in the second irradiation state in which light is irradiated from either the first illumination 21 or the second illumination 22 onto a sheet. The image processor 30 detects a defect of the sheet 1 based on the difference between the first comparable image and the second comparable image. According to such a configuration, the image processor 30 can use a uniform threshold for detecting a defect. Accordingly, a threshold for detecting a defect can be easily set in the image processor 30, and the sheet processing apparatus 100 can be introduced smoothly. In addition, the production variations among the sheet 1 can be ignored, and thus the image processor 30 can detect a defect of the sheet 1 with higher accuracy.

### INDUSTRIAL FIELD OF APPLICATION

The image reading apparatus of the present invention is more convenient and can detect a sheet with higher accuracy.

## Claims

1. An image reading apparatus comprising:
a first illumination unit (21) configured to irradiate light at a first angle onto a sheet that is being conveyed;
a second illumination unit (22) configured to irradiate light at a second angle onto the sheet that is being conveyed;
illumination controllers (24, 25) configured to switch between a first irradiation state in which light is irradiated from the first illumination unit (21) and the second illumination unit (22) onto the sheet and a second irradiation state in which light is irradiated from only either the first illumination unit (21) or the second illumination unit (22) to the sheet;
an imaging unit (23) configured to acquire a first comparable image (802) in the first irradiation state, and to acquire a second comparable image (803) in the second irradiation state; and
a defect detector (30) configured to detect a defect of the sheet based on a difference between the first comparable image (802) and the second comparable image (803).

2. The apparatus according to claim 1,
wherein the imaging unit (23) comprises a line image sensor (232) for consecutively scanning a sheet that is being conveyed, and
the defect detector (30) detects a defect of the sheet based on a difference between pixels of the first comparable image (802) and pixels of the second comparable image (803) that are located at positions corresponding to each other in a main scanning direction.

3. The apparatus according to claim 2,
wherein the illumination controller (24) switches between the first irradiation state and the second irradiation state at a timing at which the line image sensor (232) has scanned a single line.

4. The apparatus according to claim 2 or 3,
wherein the imaging unit (23) acquires, using the line image sensor (232), a sheet image from an entirety of the sheet that is being conveyed, extracts, as the first comparable image (802), an area within the sheet image read in the first irradiation state, and extracts, as the second comparable image (803), an area within the sheet image read in the second irradiation state.

5. The apparatus according to any of claims 1 to 4,
wherein the illumination controllers (24, 25) alternately switch between the first irradiation state and the second irradiation state.

6. The apparatus according to any of claims 1 to 5,
wherein the illumination controllers (24, 25) intermittently turn on either the first illumination unit (21) or the second illumination unit (22) at a timing synchronized with a timing of scanning by the line image sensor (232), so as to generate the first irradiation state and the second irradiation state.

7. The apparatus according to any of claims 1 to 6,
wherein the illumination controllers (24, 25) generate, as the second irradiation state, a state in which the first illumination unit (21) is turned on and the second illumination unit (22) is turned off, and a state in which the first illumination unit (21) is turned off and the second illumination unit (22) is turned on.

8. The apparatus according to any of claims 1 to 7,
wherein the first illumination unit (21) and the second illumination unit (22) emit infrared light, and the imaging unit (23) performs imaging using the infrared light reflected by the sheet.

9. A sheet processing apparatus comprising:
a conveyance unit (80) configured to convey a sheet;
the image reading apparatus according to any of claims 1 to 8;
an identification unit (40) configured to identify the sheet based on a result of detection by the defect detector (30); and
classification processors (50a, 50b) configured to classify the sheet based on a result of identification by the identification unit (40).

10. The apparatus according to claim 9,
wherein the imaging unit (23) comprises a line image sensor (232) for consecutively scanning a sheet that is being conveyed, and
the defect detector (30) detects a defect of the sheet based on a difference between pixels of the first comparable image (802) and pixels of the second comparable image (803) that are located at positions corresponding to each other in a main scanning direction.

11. The apparatus according to claim 10,
wherein the illumination controller (24) switches between the first irradiation state and the second irradiation state at a timing at which the line image sensor (232) has scanned a single line.

12. The apparatus according to claim 10 or 11,
wherein the imaging unit (23) acquires a sheet image from an entirety of the sheet that is being conveyed using the line image sensor (232), extracts, as the first comparable image (802), an area within the sheet image read in the first irradiation state, and extracts, as the second comparable image (803), an area within the sheet image read in the second irradiation state.

13. The apparatus according to claim 9 to 12,
wherein the illumination controllers (24, 25) alternately switch between the first irradiation state and the second irradiation state.

14. The apparatus according to claim 9 to 13,
wherein the illumination controllers (24, 25) intermittently turn on either the first illumination unit (21) or the second illumination unit (22) at a timing synchronized with a timing of scanning by the line image sensor (232) so as to generate the first irradiation state and the second irradiation state.

15. The apparatus according to claim 9 to 14,
wherein the illumination controllers (24, 25) generate, as the second irradiation state, a state in which the first illumination unit (21) is turned on and the second illumination unit (22) is turned off, and a state in which the first illumination unit (21) is turned off and the second illumination unit (22) is turned on.
